# EUROPEAN PATENT APPLICATION

(11) **EP 4 838 382 A1**
(43) Date of publication of application: **11.11.2026**
(21) Application number: 25217375.2
(22) Date of filing: 20.11.2025
(51) Int. Cl.: G06F 16/583

(54) **ZERO-SHOT IMMERSIVE OBJECT RECONTEXTUALIZATION**

(30) Priority: 05.05.2025 US 202519199178
(71) Applicant: GOOGLE LLC, Mountain View CA 94043 (US)
(72) Inventor: HOLDEN, Krista Lynn, Mountain View, 94043 (US); NARAYANASWAMY, Arunachalam, Mountain View, 94043 (US); MALHI, Ishaan, Mountain View, 94043 (US); TALIUS, Ellie Ugne, Mountain View, 94043 (US); MA, Xiaoyu, Mountain View, 94043 (US); DRISCOLL, Brendan Joseph, Mountain View, 94043 (US); PRUTHI, Garima, Mountain View, 94043 (US); BOYD, Charles Baxter, Mountain View, 94043 (US)
(74) Representative: Marks & Clerk GST

(57) **Abstract**

System and methods for generating images of objects in an updated context is disclosed. A computing system includes a zero-shot machine-learned model configured to receive one or more input images that depict an object as input and output one or more images of the object in a different context. The computing system receives an input query comprising one or more images of the object with a specific set of attributes in a first context. The computing system generates an input prompt based on the one or more images. The computing system generates one or more output images that depict the object with the specific set of attributes in a second context different from the first context based on the input prompt. The computing system causes display of the one or more output images.

## Description

### FIELD

The present disclosure relates generally to automatically generating recontextualized images of images of objects based on an input query and reference images using a sequence processing model.

### BACKGROUND

The creation of compelling visuals frequently involves displaying objects in immersive settings. Conventionally, generating these visuals requires manual manipulation of images by skilled graphic designers and photographers, or training specialized models for individual objects.

Manual image manipulation is labor-intensive, costly, and does not scale efficiently. The time and expense associated with professional photography, digital editing, and design limit the variety and volume of advertising materials that can be created. Furthermore, the subjective nature of manual editing can lead to inconsistencies in visual style and branding.

Object-specific training of machine learning models, while offering potential for automation, introduces its own set of challenges. Training a separate model for each individual object requires a significant amount of labeled data, substantial computational resources, and considerable development time. This approach is impractical for catalogs containing a large number of diverse objects or for quickly adapting to new releases. Moreover, current text-to-image models frequently exhibit limitations in accurately representing fine details, maintaining object fidelity, or seamlessly integrating objects into contextually relevant scenes. These deficiencies can result in unrealistic or unappealing advertising visuals, ultimately undermining their effectiveness.

### SUMMARY

Aspects and advantages of embodiments of the present disclosure will be set forth in part in the following description, or can be learned from the description, or can be learned through practice of the embodiments.

One example aspect of the present disclosure is directed to a computing system to generate images of an object in a lifestyle context. The computing system comprises one or more processors and one or more non-transitory computer-readable media. The non-transitory computer-readable media stores a machine-learned model and instructions. The machine-learned model is a zero-shot model configured to receive one or more input images that depict an object as input and output one or more images of the object in a different context. The instructions, when executed by the one or more processors, cause the computing system to perform operations. The operations comprise receiving, from a client device, an input query that includes one or more images of the object with a specific set of attributes in a first context. The operations comprise generating an input prompt based on the one or more images. The operations comprise generating one or more output images that depict the object with the specific set of attributes in a second context different from the first context based on the input prompt. The operations comprise causing display of the one or more output images.

One aspect of the present disclosure pertains to a computer-implemented method for generating images. The method can be performed by a computing system comprising one or more processors. The method includes receiving, via a computing system having one or more processors, one or more images of an object in a first context from a client device. The method further includes generating, via the computing system, an input prompt based on the one or more images. The method further includes generating, via the computing system, one or more output images that depict the object in a second context, which is different from the first context, based on the input prompt. The generating of the one or more output images is performed using a machine-learned model configured as a zero-shot model. The method further includes causing display, via the computing system, of the one or more output images.

Another aspect of the present disclosure pertains to one or more non-transitory computer-readable media storing instructions that, when executed by one or more processors, cause the one or more processors to perform operations. The operations comprise receiving, from a client device, one or more images of an object in a first context. The operations comprise generating an input prompt based on the one or more images. The operations comprise generating one or more output images that depict the object in a second context different from the first context based on the input prompt, wherein generating the one or more output images is performed using a machine-learned model configured as a zero-shot model. The operations comprise causing display of the one or more output images.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1 depicts an example block diagram of a system for providing zero-shot object recontextualizations in image generation by machine-learned models in accordance with example embodiments of the present disclosure.
Figure 2 depicts an example flow diagram of a process for generating images for objects in alternative contexts in accordance with example embodiments of the present disclosure.
Figure 3 depicts an example block diagram of a system for enabling a zero-shot machine-learned model to generate images of objects in alternate contexts in accordance with example embodiments of the present disclosure.
Figure 4 depicts a training system for training a zero-shot machine-learned model according to example embodiments of the present disclosure.
Figure 5 depicts an image generation system that employs a zero-shot machine-learned model to generate images of a respective objective within a target context in accordance with example embodiment in this disclosure.
Figure 6 depicts an example client-server environment 600 according to example embodiments of the present disclosure.
Figure 7 depicts a flowchart of a method 700 for generating images of objects in recontextualized environments according to aspects of the present disclosure.
Figure 8 is a block diagram of an example processing flow for using machine-learned model(s) to process input(s) to generate output(s) according to example implementations of aspects of the present disclosure.
Figure 9 is a block diagram of an example sequence processing model according to example implementations of aspects of the present disclosure.
Figure 10 is a block diagram of an example technique for populating an example input sequence for processing by a sequence processing model according to example implementations of aspects of the present disclosure.
Figure 11 is a block diagram of an example model development platform according to example implementations of aspects of the present disclosure.
Figure 12 is a block diagram of an example training workflow for training a machine-learned model according to example implementations of aspects of the present disclosure.
Figure 13 is a block diagram of an inference system for operating one or more machine-learned model(s) to perform inference according to example implementations of aspects of the present disclosure.
Figure 14 is a block diagram of an example networked computing system according to example implementations of aspects of the present disclosure.
Figure 15 is a block diagram of an example computing device according to example implementations of aspects of the present disclosure.
Figure 16 is a block diagram of an example computing device according to example implementations of aspects of the present disclosure.

Reference numerals that are repeated across plural figures are intended to identify the same features in various implementations.

### DETAILED DESCRIPTION

The present disclosure details a machine-learned image generation system for object recontextualization using zero-shot image generation. Unlike traditional methods that require extensive object-specific training or manual image manipulation, this system leverages a sequence processing model to generate realistic images of an object in different contexts, such as a lifestyle scenario, guided by textual prompts. The image generation system can leverage both the visual characteristics of an object depicted in images and their contextual embeddings to effectively recontextualize the image of the object to the desired context while maintaining object fidelity and its semantic relationships to different contexts, enabling seamless integration of the object into a target scene. This can be accomplished in a zero-shot manner (without fine-tuning for specific objects) by carefully selecting images to use while training.

To do so, the image generation system can receive or access one or more source images of an object. The source images can depict the object from one or more perspectives and in an original context. The original context can be a neutral context in which the object is depicted alone with a neutral background or in a context not associated with the target scene. These images can be provided to an image generation system. The system can generate one or more representations of each image. In some examples, the representations can be embedded representations of the image (e.g., an embedding that represents the image in a particular embedding space). The representations can also include textual representations of the image (e.g., a textual description of the image including its context and the characteristics of the object).

In some examples, the image generation system can receive a target prompt with one or more resource images. The target prompt can include a description of the target scene with a focus on the target object. The image generation system can rewrite the target prompt using distinct sets of instructions. The target prompt can be written into an instruction style prompt. In some examples, the image generation model can be trained to receive a particular style of prompt (e.g., an instruction-style prompt with a particular/standard format). Thus, the target prompt can be rewritten to use the instruction style prompt that the image generation model was trained to receive as input.

In some examples, the rewriting system can insert specific references to one or more source images (e.g., neutral images of the target object included in the model input). Thus, the images can have an associated file name when provided to the image generation system and the rewritten prompt can include specific references to the input files. In some examples, the objects can have an associated identifier or product number. In this case, the rewriting system can be updated to include specific object identifiers or numbers.

In some examples, the rewriting can include generating a plurality of target prompts, each in an instruction system but with a different phrasing of the instructions. The image generation system can provide the modified target prompts to one or more machine-learned models. The machine-learned model can process the one or more source images and one or more target prompts to generate one or more new images. The generated images can depict the object in a target.

In some examples, the generated images can be filtered or evaluated. The images can be ranked to identify one or more high-quality images. These images can be transmitted for display to the requesting user or another computing system.

The machine-learned model can be trained to accept a text-to-image prompt using additional multimodal context. In some examples, a large corpus of images can be accessed. The large corpus of images can depict objects of a large variety of types and in a large variety of contexts. The large corpus of images can have associated object names and types (and other details such as color, dimensions, weight, etc.) This corpus can contain catalog images of each object, some of which are lifestyle immersive images, but many of which contain an object on a white or neutral background. In addition, a portion of the images depict objects in 360 degrees. The corpus can include models of some of the objects (also on neutral backgrounds).

The training system can filter the large corpus of images to identify a plurality of object image groups. Each object image group can include one to three neutral images of a respective image. The neutral images can depict the respective image from different perspectives and with a neutral background. In some examples, the neutral background can be white or blank. In some examples, the training system can identify one or more images that depict the respective object without a neutral background. The training system can then alter one or more images to remove the non-neutral background and replace it with a neutral background. The object image groups can also include a lifestyle image that depicts the respective object with a lifestyle background.

In some examples, the machine-learned model can be trained using retrieval-augmented training from a web corpus. The machine-learned model can be fine-tuned using diverse multimodal instruction-based image generation tasks. In some examples, the image generation tasks can be subject-driven generation and/or image editing. Once the machine-learned model has been trained, the model can generate recontextualized images of any object without further fine-tuning. As a result, the machine-learned model is zero-shot (e.g., the model does not need any fine-tuning for specific objects.

In a particular example, a user requests the image generation system to generate a target image of a handbag worn by a person on a busy city street. The user can provide one or more source images of the handbag in a neutral context (e.g., the handbag is depicted alone with a blank or neutral background). In some examples, the one or more source images can depict the handbag from multiple perspectives. The image generation system can provide the source images to a machine-learned model. The machine-learned model can output one or more generated images depicting the handbag worn by the person on a busy city street.

The present disclosure addresses the technical challenges associated with generating contextually relevant object images by employing a zero-shot image generation technique. Doing so involves receiving one or more object images and a text prompt describing the desired scene. Instead of relying on extensive object-specific training, the system leverages a pre-trained multimodal machine-learned model to generate a recontextualized image. The model is trained to understand both the visual characteristics of an object and its semantic relationship to different environments. This allows the object to be seamlessly integrated into the scene described in the text prompt while maintaining object fidelity. Specific techniques, such as prompt rewriting and fidelity reranking, are employed to enhance the quality and relevance of the generated images. Furthermore, a multi-stage training process using curated datasets addresses challenges like artifact retention and logo/text regeneration, ensuring high-quality results.

Once generated, the recontextualized images can be used to enhance advertising visuals by displaying objects in immersive and engaging settings. This approach avoids the need for costly and time-consuming professional photography or manual image manipulation, providing a scalable and efficient solution for generating compelling object imagery.

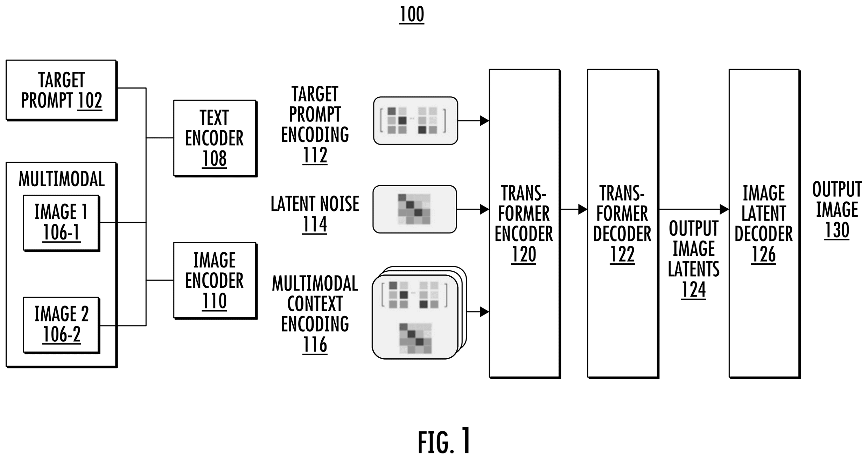

Figure 1 depicts an example block diagram of a system for providing zero-shot object recontextualizations in image generation by machine-learned models in accordance with example embodiments of the present disclosure. The image generation system 100 can include several interconnected modules to provide zero-shot object recontextualization in image generation. The image generation system 100 can receive a target prompt 102. The target prompt 102 can include a textual request specifying the content of an image generated by the image generation system 100. In some examples, the target prompt 102 can include a textual description of the desired context or scene for a specific object. For example, an advertiser may request the generation of a particular product in a specific context.

The target prompt 102 can be first passed through a pre-trained text encoder 108, which transforms the text into a target prompt encoding. The target prompt encoding 112 can be a numerical representation of the text of the target prompt 102. For example, the target prompt encoding can be a numerical representation of the target prompt with a particular embedding space. Thus, the target prompt encoding 112 can capture the semantic meaning of the prompt.

The image generation system 100 can receive multimodal context 104 associated with the target prompt 102. The multimodal context 104 can include one to three multimodal images (106-1, 106-2), which depict the object to be recontextualized. In some examples, the multimodal images (106-1 and 106-2) can depict the object from different perspectives. In some examples, these images can be neutral images. In this context, neutral images are images that depict the object with a neutral background. Neutral backgrounds can be backgrounds with a solid color (e.g., white, black, or another neutral color).

The multimodal context 104 can be provided to an image encoder 110, which generates multimodal context encodings 116. The multimodal context encodings 116 can represent the visual features of the images included in the multimodal context 104 (images 106-1 and 106-2). The multimodal context encoding 116 can also be generated using textual descriptions of the images included in the multimodal context 104. Specifically, each image can have a textual description of the content of the image or the image generation system can generate a textual description of the contents of the images. In addition, the target prompt encoding 112 can be used when generating the multimodal context encodings 116. Thus, the multimodal context encodings 116 can include information pertaining to the multimodal context and the target prompt.

In some examples, the target prompt 102 can be rewritten into an instruction format and/or to include a plurality of prompts with textual variations. These modified prompts can be used by the image generation system 100 to generate a plurality of different potential versions of the model output (e.g., generated images). Once the multimodal context encodings 116 and the target prompt encoding 112 are generated, they can be provided, along with latent noise 114, to a transformer encoder 120). The transformer encoder 120 processes the information, attending to relationships between the text prompt and the visual features of the object. The output of the transformer encoder 120 is then passed to a transformer decoder 122.

The transformer decoder 122 takes the encoded information and generates output image latents 124. The output image latents 124 are an intermediate representation of the image. These latents are then input into an image latent decoder 126. The image latent decoder 126 transforms the latents into a viewable image 130. This final step can render the image depicting the object in the recontextualized setting as specified by the initial target prompt 102 and guided by the features derived from the multimodal images (106-1, 106-2).

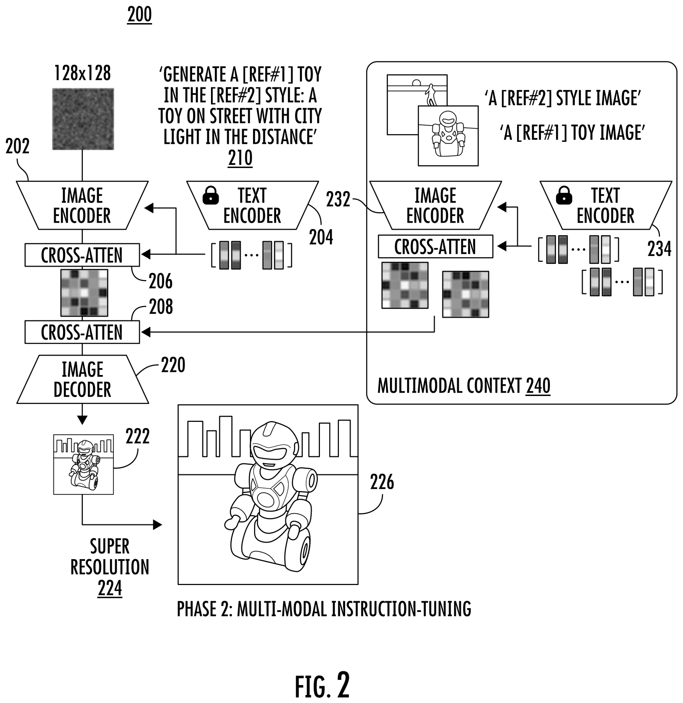

Figure 2 depicts an example flow diagram 200 of a process for generating images for objects in alternative contexts in accordance with example embodiments of the present disclosure. Generating an image that depicts an object with a different context / background can be performed by one or more machine-learned models. The one or more machine-learned model can perform a series of steps that include encoding, attention, and decoding steps, culminating in a super-resolution enhancement.

The image generation system can provide one or more input images (e.g., source images and/or target images) to an image encoder 232. The input images can depict an object from one or more perspectives or viewing angles. The input images can also include a neutral background (e.g., a white background) or no background at all. In some examples, the input images can also include a target image that depicts a particular background or context to use when generating the output image.

The image encoder 232 can process the one or more input images to produce image embeddings. The image embeddings can be mathematical representation of the image within a particular embedding space. The image embeddings can represent the visual characteristics of the input images. Simultaneously, a text encoder (234) transforms text associated with the input image (textual descriptions of the context of the images).

The text encoder 234 can generate the text embeddings that represent the semantic meaning of the textual descriptions. The image generation system can use cross attention mechanism to combine the text embeddings and the image embeddings, allowing the model to align relevant textual cues with corresponding image features and contextual information.

The input prompt 210 can be encoded by a text encoder 204 into a text embedding. In some examples, an image that includes noise can be embedded by the imagery encoder 202 and then combined with the text embedding from text encoder 204 using one or more cross attention mechanisms.

These cross-attention blocks 206, 208 facilitate the integration of text descriptions with the image embeddings, allowing the model to understand how the input image should be modified to adhere to the instructions provided in the text. The combined features are then fed into an image decoder 220, which generates an intermediate output image 222. This intermediate image represents the model's initial attempt to realize the instructed modifications.

To further enhance the visual quality and detail of the intermediate image, a super resolution module 224 can upscale the resolution of the image 222 and refine its visual features, producing a final, high-resolution output image 226. The diagram also highlights image encoder 232, text encoder 234 and multimodal context 240 with connections to the cross-attention blocks.

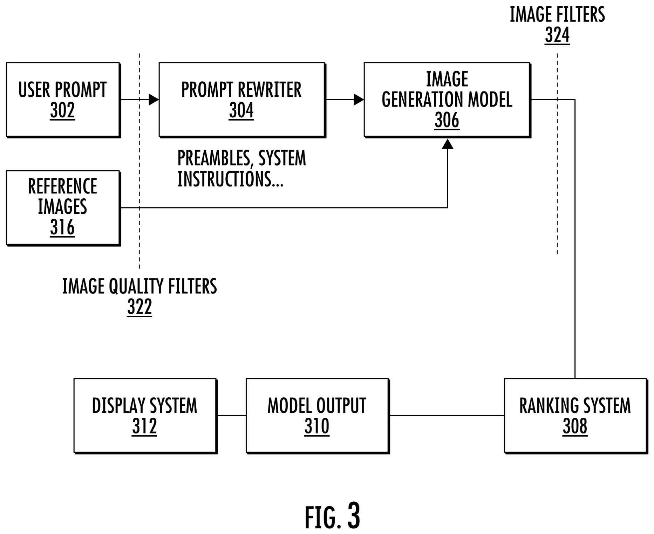

Figure 3 depicts an example block diagram of a system for enabling a zero-shot machine-learned model to generate images of objects in alternate contexts in accordance with example embodiments of the present disclosure. The image generation system can receive a user prompt including one or more images, process the prompt, and generate images based on the prompt. The generated images can include an object in the one or more images but recontextualized to be depicted in a new situation, with a different background and in use. The image generation system can rank the generated images and transmit the highest-quality images to the user for display. The image generation system includes a prompt rewriter 304, an image generation model 306, a ranking system 308, a model output 310, and a display system 312. The image generation system can use reference images 316 as context to help guide the image generation process.

The image generation system can receive a user prompt 302, which represents the user's initial request for an image. This prompt specifies what the user wants to see in the generated image. The content of the prompt can include a natural language description of the object of interest, the context of the output image, and any other instructions. The user prompt can be processed using a text filter to ensure that the prompt does not violate any restrictions and adheres to any system guidelines.

Next, the user prompt is fed into a prompt rewriter 304. The prompt rewriter 304 can modify and refine the initial user prompt to improve the quality and relevance of the generated images. In some examples, the prompt rewriter 304 can alter the format of the prompt into an instruction-style format that has been used to train the image generation model. In some examples, the prompt rewriter can add preambles and system instructions to guide the image generation model. The output of the prompt rewriter 304 is a modified, more detailed prompt that is then passed on to the image generation model. In some examples, the prompt rewriter can generate a plurality of modified prompts, each with variations.

The modified prompt (or plurality of modified prompts) can be provided to an image generation model 306. The image generation model 306 can generate output images based on the provided prompt and any reference images. The image generation model 306 can utilize the modified prompt to create images that depict the object in the desired lifestyle scene (e.g., the object is depicted in use or otherwise part of a lifestyle scene).

The one or more generated images can be sent to a ranking system 308. The ranking system 308 can evaluate each image and assign it a rank based on its quality and relevance. The ranking system 308 can use image quality filters to identify and remove low quality or inappropriate images. The output of the ranking system is a set of ranked images, with the highest-ranked images considered the best representations of the user's initial request.

The ranked images then become the model output 310. The model output represents the final set of generated images after the ranking and filtering process. These images are ready to be displayed to the user.

Finally, the model output is sent to a display system 312. The display system 312 can transmit the model output to a computing device for display. In some examples, the model output is transmitted via a computing network for display at a user computing device. The display system ensures that the images are displayed in a visually appealing and easily accessible format. The user can then view the generated images and select the ones that best meet their needs.

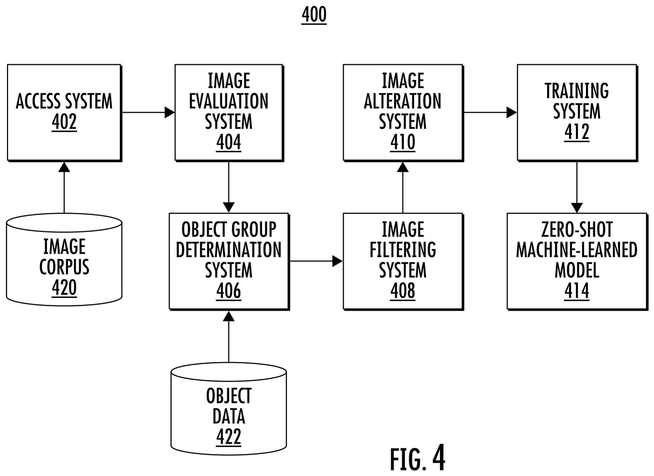

Figure 4 depicts a training system for training a zero-shot machine-learned model according to example embodiments of the present disclosure. The training system can include various components that work together to process images, filter data, and alter images, ultimately train a zero-shot machine-learned model. The training system 400 can include an access system 402, an image evaluation system 404, an object group determination system 406, an image filtering system 408, an image alteration system 410, a training system 412, a zero-shot machine-learned model 414, an image corpus 420, and object data 422.

The image corpus 420 can include a vast collection of images depicting a wide variety of objects in numerous contexts. The images can be associated with metadata, such as object names, types, colors, dimensions, and weights. The corpus may include catalog images with objects on neutral backgrounds, lifestyle immersive images, 360-degree images, and object models. In some examples, the image corpus 420 can be stored at a single database of images. In other examples, the image corpus 420 can represent a plurality of images stored at a plurality of distinct databases available via a computing network.

The access system 402 can access a plurality of images from image corpus 420. This access system 402 can enable or facilitate the retrieval of images based on various criteria, including object type, context, and associated metadata. The access system 402 can provide the images it retrieves to subsequent systems for processing.

The image evaluation system 404 can receive a plurality of images from the access system 402. The image evaluation system 404 can evaluate the plurality of images based on predefined criteria. The evaluation may include assessing image quality, safety, and relevance. This filtering can be used to ensure only usable images remain in the dataset. The output of the image evaluation system 404 consists of evaluated images with associated scores or labels indicating their suitability for training.

The object group determination system 406 can receive the evaluated images. The object group determination system 406 can identify and group images based on the objects they depict. In some examples, the object group determination system 406 can combine neutral images and lifestyle images of the same object into object image groups. The object group determination system 406 can determine for each image, whether it depicts an object, and if so what the context of that object is. In this way, the object group determination system 406 can identify images that depict the same object. In some examples, the object group determination system 406 can determine the specific perspective on the object in each image. The object group determination system 406 can output a plurality of object image groups, each containing at least one neutral image and one lifestyle image. In some examples, the plurality of evaluated images can have associated metadata indicating the objects depicted in the image. The object group determination system 406 can search or filter the evaluated images based on this metadata to identify all the images associated with a particular object in the plurality of evaluated images.

In some examples, the object group determination system 406 can access information about objects from the object data 422. The object data 422 can include metadata describing the characteristics of objects that might be depicted in the image corpus 420. This may include physical properties (e.g., color, dimensions, weight), category information, and semantic relationships to other objects and different contexts. In some examples, the object can include information about particular products. For example, a handbag made by a particular manufacturer can have its metadata stored in a format that allows the object group determination system 406 to distinguish the specific make and SKU of the handbag from handbags generally. The object group determination system 406 can group the images into object groups.

In some examples, an object group of images can include 1 to 3 neutral images (e.g., images that depict the object with a neutral or blank background) and 1 image of the object with a lifestyle background. Lifestyle images with lifestyle backgrounds can be images that depict the object in use or fully integrated into a scene with people, other objects, and various types of scenery.

The image filtering system 408 can receive the images, object data, and information describing one or more object groups. The image filtering system 408 can filter images that do not meet specific criteria, such as image quality standards or safety guidelines. The result is a refined set of images suitable for training. In addition, the image filtering system 408 can remove images of an object that have the same perspective as another image of that object already in the filtered set and thus do not provide useful training information.

The image alteration system 410 can receive images that depict objects with non-neutral backgrounds. This image alteration system 410 can alter those images to remove non-neutral backgrounds and replace them with neutral backgrounds. This can create a consistent set of images for training. The output is a set of images with uniform neutral backgrounds.

The training system 412 can utilize filtered images and object data to train the zero-shot machine-learned model 414. To do so, the training system 412 can employ retrieval-augmented training and fine-tuning techniques. The function of the training system 412 can be to refine the zero-shot machine-learned model 414 for accurate recontextualization.

In some examples, the training system 412 can train the zero-shot machine-learned model 414 by selecting a particular object group (with one to three neutral images of the object and one lifestyle image of the object in a lifestyle scene or with a lifestyle background.) The training system 412 can provide the neutral images from the provide 1-3 neutral images of an object to the zero-shot machine-learned model 414. The zero-shot machine-learned model 414 can generate an output. The training system 412 can compare the output to the lifestyle image associated with the particular object group. The training system can adjust the parameters of the zero-shot machine-learned model 414 based on that comparison.

In some examples, the training system can generate a prompt based on the desired lifestyle image. Fore example, if the desired lifestyle image depicts a tall woman in a shopping mall holding the target object (e.g., a red handbag), the training model can, based on the target lifestyle image, generate a prompt intended to produce the target lifestyle image. The model output can then be compared to the target lifestyle image and the zero-shot machine-learned model can be adjusted based on the comparison.

In some examples, the image corpus 420 can represent multiple different corpuses that include distinct sets of images. In this example, the training system 412 can train a different zero-shot machine-learned model for each respective corpus in the multiple different corpuses. For example, for each respective corpus, the training system can perform all of the steps shown in FIG. 4 for that respective corpus. This training can result in a plurality of trained zero-shot machine-learned models, each of which trained based on the images in a different image corpus. The training system 412 can average the parameter values (e.g., the weights) in the plurality of distinct zero-shot machine-learned models and use the average values for the final zero-shot machine-learned model 414.

The zero-shot machine-learned model 414 can be trained using images accessed from the image corpus (after being processed by the preceding systems and training system 412. Once trained, the model can generate recontextualized images of virtually any object without specific training, performing subject-driven generation and image editing.

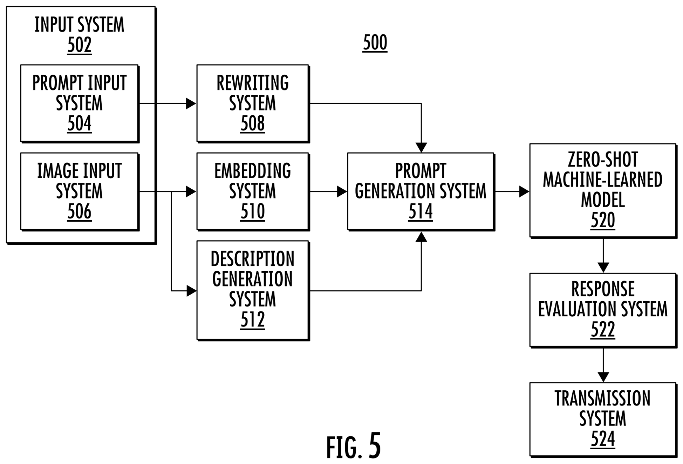

Figure 5 depicts an image generation system 500 that employs a zero-shot machine-learned model to generate images of a respective objective within a target context in accordance with example embodiment in this disclosure. The image generation system includes an input system 502 to receive initial data, which can be a user query via a query input system 504 or an image via an image input system 506, a rewriting system 508 to refine the initial query, an embedding system 510 to transform data into a numerical representation, a description generation system 512 to generate a textual description of any images, a prompt generation system 514 to generate a one or more prompts for image generation; a zero-shot machine-learned model 520 to generate one or more images based on the one or more queries, a response evaluation system 522 to determine the quality and relevance of the one or more image, and a transmission system 524 to transmit the model response to a computing device for display to a user.

The image generation system includes an input system 502 that receives input data from a user for processing. This data can come in the form of a user-provided input query via a query input system 504 or one or more images provided via the image input system 506. In some examples, the input query can include a description of a particular object (e.g., an object represented in one or more accompanying images) and a target context or scene. In some examples, both a query and image can be received from the input system 502. The images received can be of various formats, resolutions, and color depths, and may depict objects, scenes, or abstract concepts.

The images can be received from digital cameras, image repositories, or other computing systems. In some instances, the images may include metadata providing additional context or information about the image content, such as object recognition data or location information. In some examples, the input images can include some neutral images which display an object without a background or using a neutral background. The neutral images can display the object from different perspectives. In some examples, the images can also include target scene images. The target scene images can depict a situation or scene into which the user requests the object be integrated.

The image generation system can include a rewriting system 508, which can be used to rewrite or refine the initial query. In some examples, the query input from a user does not include a query. For example, the user can request the system to generate an advertising campaign based on a particular object. Without the user specifically submitting a textual prompt, the image rewriting system can generate a prompt based on the input images, user data (e.g., past user history), and existing examples.

In some examples, the user has provided a prompt and the rewriting system 508 can update the format of the prompt to an instruction-style format (e.g., based on the format used to train the image generation model). In addition, the rewriting system 508 can generate a plurality of prompts, each prompt including a variation of the initial prompt. The additional prompts can be used to generate a variety of model outputs. This can provide alternatives if one or more of the images output by the model has unintentional flaws or does not meet quality standards.

The query input system 504 and the image input system 506 can provide the input query and the input images to an embedding system 510. The embedding system 510 can convert the input data (e.g., both the input query and the one or more input images) into an embedding (e.g., a numerical representation suitable for machine learning).

The image generation system 500 can include a description generation system 512. The description generation system 512 can generate a text description of the input data. Specifically, the description generation system 512 can access images via the image input system 506 and generate descriptions of the content of the images. In some examples, the description generation system 512 includes a machine-learned model trained to take images as input and output descriptions of the content in the images.

A prompt generation system 514 can receive one or more rewritten queries from the rewriting system 508, the multimodal embeddings from the embedding system 510, and image descriptions from the description generation system 512. The prompt generation system 514 can generate one or more prompts for the zero-shot machine-learned model based on these inputs. In some examples, if the rewriting system 508 has generated one or more rewritten input prompts, the prompt generation system 514 can generate a different prompt for each of the one or more rewritten input prompts.

The prompt generation system 514 can provide the one or more generated prompts to the zero-shot machine-learned model 520. The zero-shot machine-learned model 520 can generate an output image that recontextualizes a respective object into a particular context, background or scene. The respective object can be the object described in the input query and the particular context, background or scene can be described in the input query or shown in an image in the input images.

In some examples, multiple different prompts are provided by the prompt generation system 514 and the zero-shot machine-learned model 520 can output multiple output images. The multiple output images can be provided to the response evaluation system 522.

The response evaluation system 522 can evaluate the images to filter out any images that do not meet the quality and relevance standards for the image generation system. For example, each generated image can be analyzed to determine whether the generated image includes the target object and that the target object is pictured in the target scene. Any generated images that do not include both the target object and the target scene can be discarded or filtered out.

The response evaluation system 522 can rank the one or more generated images by quality (or other factors). In some examples, the response evaluation system 522 can select on or more generated images based on their ranks. The selected images can be provided to the transmission system 524. The transmission system 524 can transmit the one or more selected images for display to the requesting user. In some examples, the generated images are transmitted to a computing system for a user other than the requesting user.

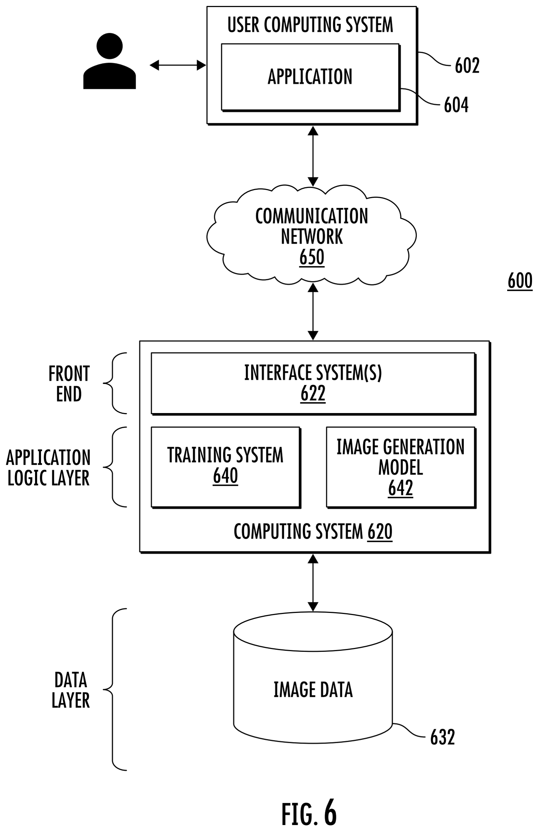

Figure 6 depicts an example client-server environment 600 according to example embodiments of the present disclosure. The client-server system environment 600 includes one or more user computing systems 602 and a server computing system 620. One or more communication networks 650 can interconnect these components. The one or more communication networks 650 may be any of a variety of network types, including local area networks (LANs), wide area networks (WANs), wireless networks, wired networks, the Internet, personal area networks (PANs), or a combination of such networks.

A user computing system 602 can be one of, but is not limited to, a personal computing system, a smartphone, a smartwatch, a laptop computing device, and a tablet computing system. In some examples, the user computing system 602 can include one or more application(s) 604, such as search applications, communication applications, navigation applications, productivity applications, game applications, word processing applications, or any other applications. The application(s) can include a web browser that can access web-based services. The user computing system 602 can use the web browser application (or other applications) to send requests to and receive responses from the server computing system 620. The user computing system 602 can transmit a request to the server computing system 620. The request can be an input query. The server computing system 620 can generate a prompt for the machine-learned model (e.g., a sequence processing model). The prompt can be provided as input to the sequence processing model. The server computing system can return a model response to the user computing system 602.

As shown in FIG. 6, the server computing system 620 can generally be based on a three-tiered architecture, consisting of a front-end layer, application logic layer, and data layer. As is understood by skilled artisans in the relevant computer and Internet-related arts, each component shown in FIG. 6 can represent a set of executable software instructions and the corresponding hardware (e.g., memory and processor) for executing the instructions. To avoid unnecessary detail, various components and engines that are not germane to conveying an understanding of the various examples have been omitted from FIG. 6. However, a skilled artisan will readily recognize that various additional components, systems, and applications may be used with a user computing system 602, such as that illustrated in FIG. 6, to facilitate additional functionality that is not specifically described herein. Furthermore, the various components depicted in FIG. 6 may reside on a single server computer or may be distributed across several server computers in various arrangements. Moreover, although server computing system 620 is depicted in FIG. 6 as having a three-tiered architecture, the various examples of embodiments are not limited to this architecture.

As shown in FIG. 6, the front end can consist of an interface system(s) 622, which receives communications from one or more user computing system 602 and communicates appropriate responses to the user computing system 602. For example, the interface system(s) 622 may receive requests in the form of Hypertext Transfer Protocol (HTTP) requests, or other web-based application programming interface (API) requests. The user computing system 602 may be executing conventional web browser applications or applications developed for a specific platform to include any of a wide variety of computing devices and operating systems.

As shown in FIG. 6, the data layer can include an image data store 632. The image data store 632 can store data associated with a plurality of images. For example, the image data store 632 can include a vast collection of images depicting objects of a large variety of types and in a large variety of contexts. The large corpus of images can have associated object names and types (and other details such as color, dimensions, weight, etc.) In some examples, the large corpus of images can be used by the training system 640. In other examples, the image data store 632 can be used to generate images in response to input queries.

The application logic layer can include application data that provides a wide range of other applications and services, allowing users to submit queries and receive responses. The application logic layer can include a training system and an image generation model 642.

The computing system 620 further contains a training system 640 and an image generation model 642. The training system 640 is configured to train the image generation model 642 by selecting images from the image data store 632. The training system 640 filters the image data store 632 to identify a plurality of object image groups, where each object image group includes one or more neutral images of an object depicted with a neutral background, and at least one lifestyle image of the object depicted in a non-neutral setting.

The training system 640 refines the machine-learned model for accurate recontextualization by training on these object image groups. The image generation model 642 creates recontextualized images of objects without object-specific training. In this way, the image generation model 642 can be zero-shot (it does not need additional fine-tuning for each object).

The image generation model 642 can take one or more prompts as input. The prompts include an input query (e.g., a textual description of a request including information describing the target object and the target or desired scene). The prompt can include one or more source images of an object. The source images depict the object from one or more perspectives, and the prompt text describes the context into which the object is to be recontextualized.

The model output can be one or more recontextualized images of the target object in the described scene. The underlying machine-learned model is trained on a large and diverse dataset of images and their associated textual descriptions, enabling it to understand the visual characteristics of objects and their semantic relationships to different environments. This allows the model to seamlessly integrate the object into the new scene while maintaining object fidelity and its semantic relationships to different contexts. The model's ability to perform this recontextualization without object-specific training makes it particularly well-suited for generating a wide variety of advertising visuals in an efficient and scalable manner.

The model output can be transmitted to the user computing system 602 for display. For example, the model output can include one or more images. The one or more images can be displayed on a screen.

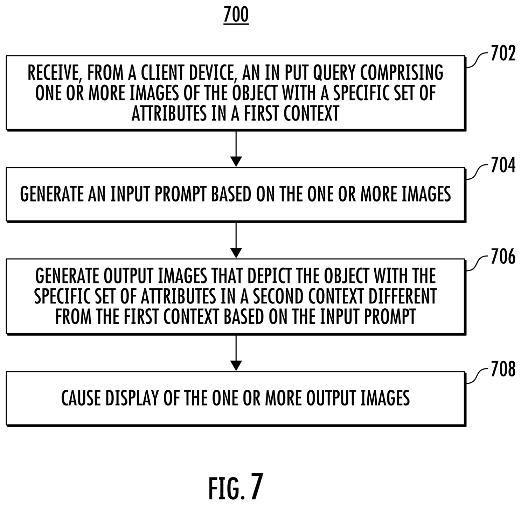

Figure 7 depicts a flowchart of a method 700 for generating images of objects in recontextualized environments according to aspects of the present disclosure. One or more portion(s) of example method 700 can be implemented by a computing system that includes one or more computing devices such as, for example, computing systems described with reference to the other figures. Each respective portion of example method 700 can be performed by any (or any combination) of one or more computing devices. Moreover, one or more portion(s) of example method 700 can be implemented on the hardware components of the device(s) described herein, for example, to train one or more systems or models. Figure 7 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 7 is described with reference to elements/terms described with respect to other systems and figures for exemplary illustrated purposes and is not meant to be limiting. One or more portions of example method 700 can be performed additionally, or alternatively, by other systems.

In some examples, the image generation system is configured to generate images of an object in an alternate context. The image generation system can comprise one or more processors; one or more non-transitory computer-readable media that collectively stores a machine-learned model, wherein the machine-learned model is a zero-shot model and is trained to receive one or more input images that depict an object as input and output one or more images of the object in a different context.

In some examples, the machine-learned model can be trained using a large corpus of images and metadata about those images. In some examples, the training system can filter the large corpus of images to identify a plurality of object image groups. Object image groups can be grouping of images that all include depictions of a respective object. Note that to be grouped in the same object image groups, two images should depict objects that share the same characteristics, not just an object of the same general type.

For example, if a first image includes a specific Gameboy model, it will not be grouped with a second image depicting the Game Gear, despite both images including handheld gaming systems. Instead, the first image will be grouped with an image depicting a Gameboy of the same model type, with the same color, and so on. The training system can remove any images in the larger corpus of images that are not included in at least one object image group.

In some examples, to group images into object image groups the training model can identify one or more neutral images that depict a first object with a neutral background. The training model can identify at least one lifestyle image that depicts the first object with a lifestyle background. The training system can group the one or more neutral images and the at least one lifestyle image into an object image group associated with the first object.

In some examples, the one or more neutral images include at least two images that depict the first object from two different perspectives. Identifying one or more neutral images that depict a first object with a neutral background can comprise identifying a target image that depict the first object with a non-neutral background. The training system can alter the target image to replace the non-neutral background with a neutral background. In this way, images that include the particular object but do not have a neutral background can be used for training by removing or altering the background.

The image generation system can, at 702, receive, from a client device, an input query comprising one or more images of the object with a specific set of attributes in a first context. In some examples, the first context is a neutral context. The one or more images can depict the object from more than one perspective. In some examples, the second context is a life-style relevant context. In some examples, the lifestyle relevant context includes depicting the object in use.

The image generation system can, at 704, generate an input prompt based on the one or more images. In some examples, the original prompt is received with the one or more images. The images can depict a particular object, and the input prompt can include instructions to generate a new image that depicts the particular object in a new context. In some examples, generating the input prompt further comprises rewriting the original prompt to create a plurality of rewritten prompts, wherein each rewritten prompt includes a distinct set of instructions for the machine-learned model. In some cases, the image generation system can rewrite the prompt to a specific instruction-style format.

The image generation system can generate one or more output images for each rewritten prompt in the plurality of rewritten prompts. For example, each rewritten prompt can include a variation of the original prompt. As a result, the output images generated in response to a respective rewritten prompt differ slightly from the output images generated in response to a different rewritten prompt.

The image generation system can, at 706, generate one or more output images that depict the object with the specific set of attributes in a second context different from the first context based on the input prompt. In some examples, the image generation system can, for a respective output image in the one or more output images, evaluate the respective output image to determine whether the respective output image satisfies a fidelity metric. In response to determining that the respective output image does not satisfy the fidelity metric, the image generation system can remove the respective output image from the one or more output images.

In some examples, evaluating the respective output image to determine whether the respective output image satisfies the fidelity metric can comprise determining whether the respective output image depicts the object. The image generation system can determine one or more characteristics of the object. In some examples, the image generation system can determine whether the respective output image includes the one or more characteristics of the object.

In some examples, the image generation system can generate, for one or more output images in the one or more output images, a quality score. The image generation system can rank the one or more output images based on the quality score. The image generation system can select a predetermined number of output images based on the ranking of the one or more output images. The image generation system can provide the predetermined number of output images for display. In some examples, the image generation system can, at 708, cause display of the one or more output images.

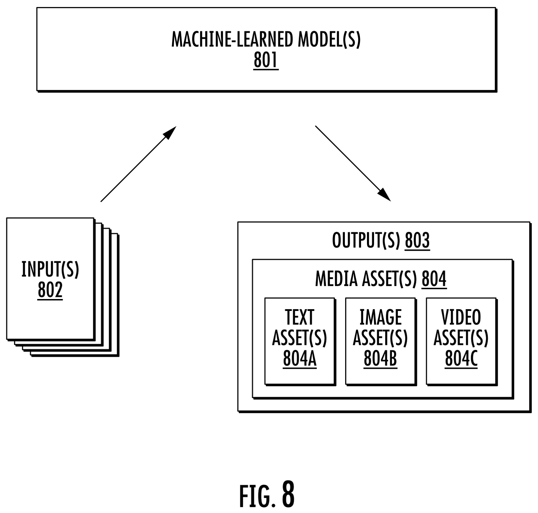

Figure 8 is a block diagram of an example processing flow for using machine-learned model(s) 801 to process input(s) 802 to generate output(s) 803.

Machine-learned model(s) 801 can be or include one or multiple machine-learned models or model components. For instance, machine-learned model(s) 801 can include machine-learned media asset generation model 801A and/or machine-learned content item generation model 801B. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 801 can include a single or multiple instances of the same model configured to operate on data from input(s) 802. Machine-learned model(s) 801 can include an ensemble of different models that can cooperatively interact to process data from input(s) 802. For example, machine-learned model(s) 801 701 can employ a mixture-of-experts structure.

Input(s) 802 can generally include or otherwise represent various types of data. Input(s) 802 can include one type or many different types of data. For instance, inputs can include existing media asset(s) 802A (e.g., existing content items) and/or data resources 802B. Output(s) 803 can be data of the same type(s) or of different types of data as compared to input(s) 802. Output(s) 803 can include one type or many different types of data. For instance, output(s) 803 can include media asset(s) 804 and/or content item(s) 805. Media asset(s) 804 can include, for example, text asset(s) 804A, image asset(s) 804B, and/or unique profile data 804C.

Example data types for input(s) 802 or output(s) 803 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 802 or outputs 803, example combinations of data types include image data and audio data, image data and natural language data, natural language data and software code data, image data and biometric data, sensor data and medical data, etc. It is to be understood that any combination of data types in an input 802 or an output 803 can be present.

An example input 802 can include one or multiple data types, such as the example data types noted above. An example output 803 can include one or multiple data types, such as the example data types noted above. The data type(s) of input 802 can be the same as or different from the data type(s) of output 803. It is to be understood that the example data types noted above are provided for illustrative purposes only. Data types contemplated within the scope of the present disclosure are not limited to those examples noted above.

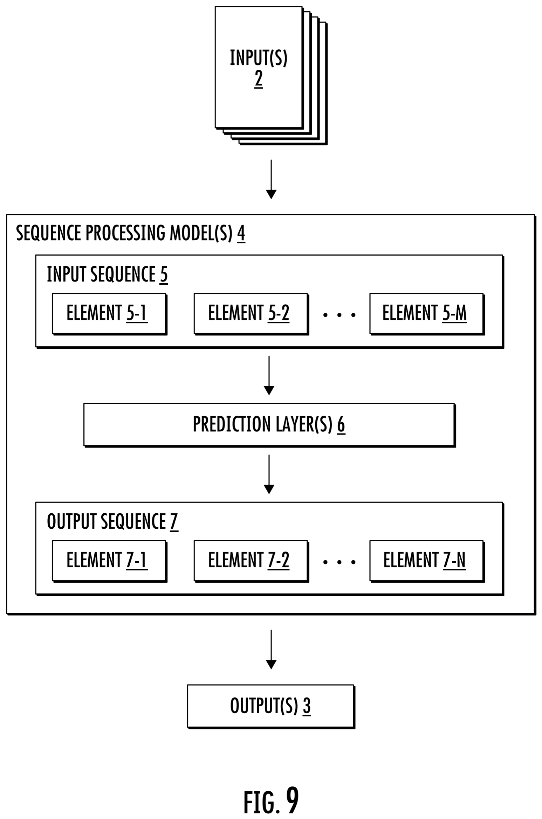

Figure 9 is a block diagram of an example implementation of an example machine-learned model configured to process sequences of information. For instance, an example implementation of machine-learned model(s) 801 can include machine-learned sequence processing model(s) 4. An example system can pass input(s) 802 to sequence processing model(s) 4. Sequence processing model(s) 4 can include one or more machine-learned components. Sequence processing model(s) 4 can process the data from input(s) 802 to obtain an input sequence 5. Input sequence 5 can include one or more input elements 5-1, 5-2, ... , *5-M,* etc. obtained from input(s) 802. Sequence processing model 4 can process input sequence 5 using prediction layer(s) 6 to generate an output sequence 7. Output sequence 7 can include one or more output elements 7-1, 7-2, ... , 7-*N,* etc. generated based on input sequence 5. The system can generate output(s) 803 based on output sequence 7.

Sequence processing model(s) 4 can include one or multiple machine-learned model components configured to ingest, generate, or otherwise reason over sequences of information. For example, some example sequence processing models in the text domain are referred to as "Large Language Models," or LLMs. *See, e.g.,* PaLM 2 Technical Report, GOOGLE, https://ai.google/static/documents/palm2techreport.pdf (n.d.). Other example sequence processing models can operate in other domains, such as image domains, *see, e.g.,* Dosovitskiy et al., An Image is Worth 16x16 Words: Transformers for Image Recognition at Scale, ARXIV:2010.11929v2 (Jun. 3, 2021), audio domains, *see, e.g.,* Agostinelli et al., MusicLM: Generating Music From Text, ARXIV:2301.11325v1 (Jan. 26, 2023), biochemical domains, *see, e.g.,* Jumper et al., Highly accurate protein structure prediction with AlphaFold, 596 Nature 583 (Aug. 26, 2021), by way of example. Sequence processing model(s) 4 can process one or multiple types of data simultaneously. Sequence processing model(s) 4 can include relatively large models (e.g., more parameters, computationally expensive, etc.), relatively small models (e.g., fewer parameters, computationally lightweight, etc.), or both.

In general, sequence processing model(s) 4 can obtain input sequence 5 using data from input(s) 802. For instance, input sequence 5 can include a representation of data from input(s) 802 in a format understood by sequence processing model(s) 4. One or more machine-learned components of sequence processing model(s) 4 can ingest the data from input(s) 802, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 802 and parse the data into a sequence of elements to obtain input sequence 5. For example, a portion of input data from input(s) 802 can be broken down into pieces that collectively represent the content of the portion of the input data. The pieces can provide the elements of the sequence.

Elements 5-1, 5-2, ... , *5-M* can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, ... , 5-M can represent tokens obtained using a tokenizer. For instance, a tokenizer can process a given portion of an input source and output a series of tokens (e.g., corresponding to input elements 5-1, 5-2, ... , 5-*M*) that represent the portion of the input source. Various approaches to tokenization can be used. For instance, textual input source(s) can be tokenized using a byte-pair encoding (BPE) technique. Image-based input source(s) can be tokenized by extracting and serializing patches from an image.

In general, arbitrary data types can be serialized and processed into input sequence 5. It is to be understood that element(s) 5-1, 5-2, ... , 5-M depicted in Figure 9 can be the tokens or can be the embedded representations thereof.

Prediction layer(s) 6 can predict one or more output elements 7-1, 7-2, . . . , 7-*N* based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, . . . , 5-*M*. In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of __." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. A transformer is an example of a machine-learned model architecture that uses an attention mechanism to compute associations between items within a context window. The context window can include a sequence that contains input sequence 5 and potentially one or more output element(s) 7-1, 7-2, ... , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and re-generating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other.

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

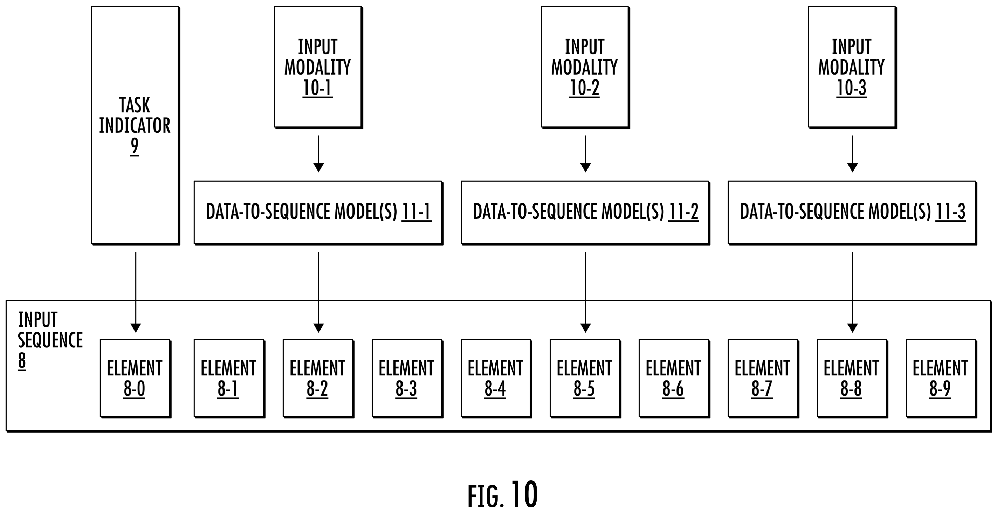

Figure 10 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations therebetween.

For example, elements 8-0, ... , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be learned within a continuous embedding space.

Input modalities 10-1, 10-2, and 10-3 can be associated with various different data types (e.g., as described above with respect to input(s) 1102 and output(s) 1103).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary datatype data-to-sequence model can subdivide an input of that arbitrary datatype and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

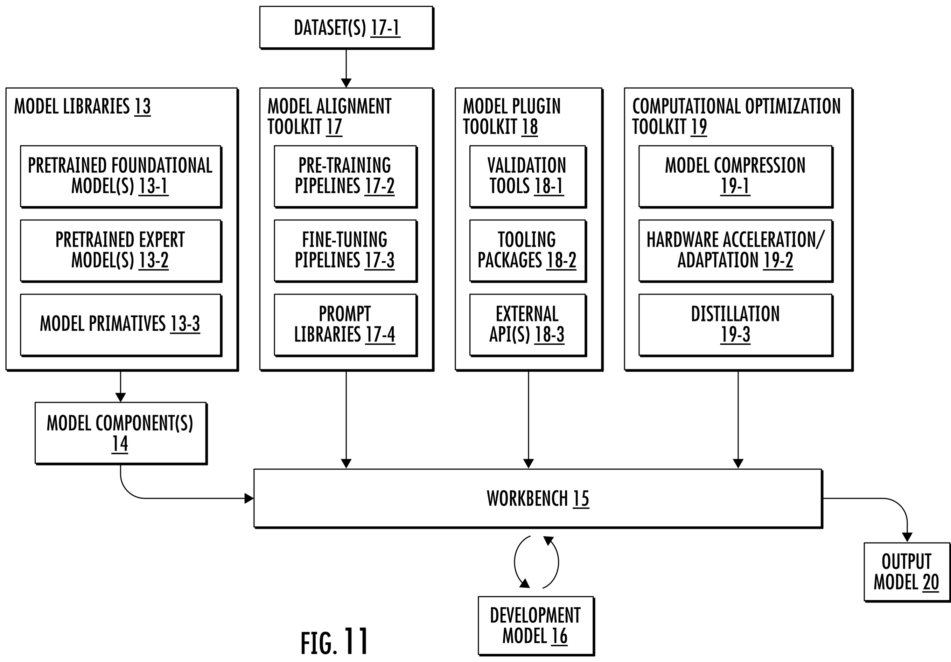

Figure 11 is a block diagram of an example model development platform 12 that can facilitate creation, adaptation, and refinement of example machine-learned models (e.g., machine-learned model(s) 1101, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing the accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tuned models can achieve satisfactory performance without examples in the inputs. For instance, zero-shot prompts can include inputs that lack examples. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based on one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models, e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instructions that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

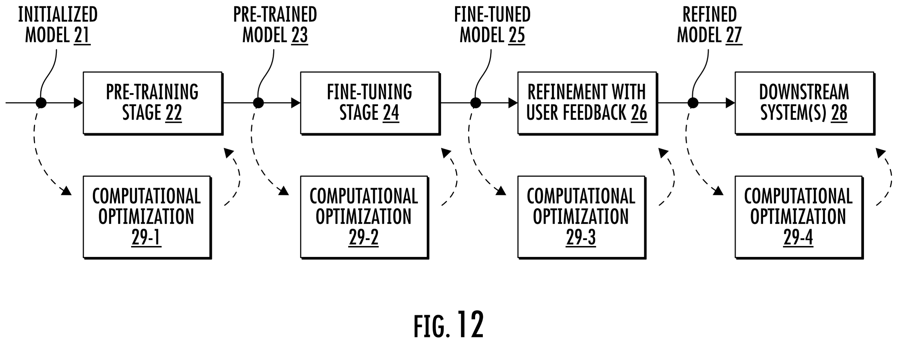

Figure 12 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. FIG. 21 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 21 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model has satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, . . . , 29-4 can all be the same, all be different, or include at least some different optimization techniques.

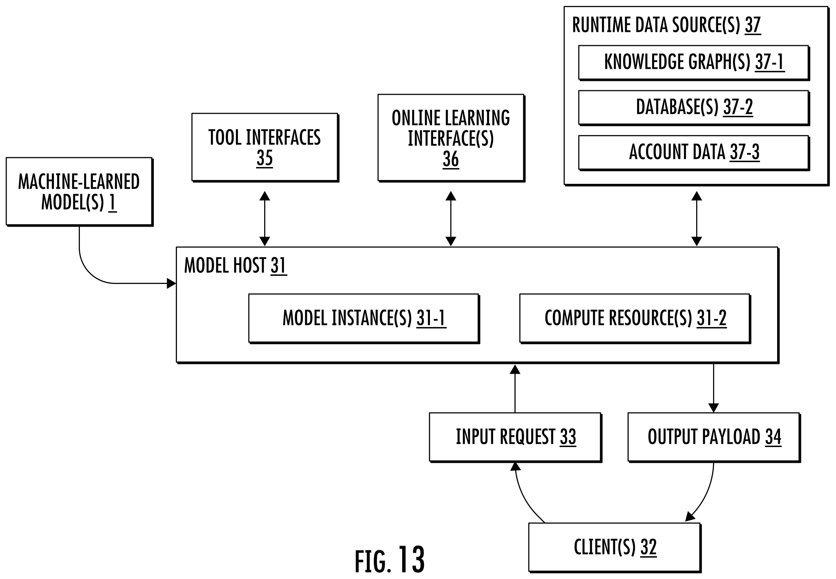

Figure 13 is a block diagram of an inference system for operating one or more machine-learned model(s) 1101 to perform inference (e.g., for training, for deployment, etc.). A model host 31 can receive machine-learned model(s) 1101 . Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 1102 for input to machine-learned model(s) 1101 . Machine-learned model(s) 1 can process input(s) 1102 to generate output(s) 1103. Using output(s) 1103, model host 31 can return an output payload 34 for responding to input request 33 from client(s) 32. Output payload 34 can include or be based on output(s) 1103.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1101 . For instance, online learning interface(s) 36 can be used within reinforcement learning loops to retrieve user feedback on inferences served by model host 31. Model host 31 can access runtime data source(s) 37 for augmenting input(s) 1102 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 1102. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on the same device or system as client(s) 32. Model host 31 can be a machine-learning service that runs on-device to provide machine-learning functionality to one or multiple applications operating on a client device, which can include an application implementing client(s) 32. Model host 31 can be a part of the same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored in persistent storage, temporarily cached, or loaded into high-speed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 1102. Model host 31 can process input request 33 to obtain input(s) 1102. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 1102 can be distributed across the batch dimension (e.g., rows of an array). The separate input(s) 1102 can include completely different contexts. The separate input(s) 1102 can be multiple inference steps of the same task. The separate input(s) 1102 can be staggered in an input structure, such that any given inference cycle can be operating on different portions of the respective input(s) 1102. In this manner, for instance, model host 31 can perform inference on the batch in parallel, such that output(s) 1103 can also contain the batch dimension and return the inference results for the batched input(s) 1102 in parallel. In this manner, for instance, batches of input request(s) 33 can be processed in parallel for higher throughput of output payload(s) 34.

Output payload 34 can include or be based on output(s) 1103 from machine-learned model(s) 1101 . Model host 31 can process output(s) 1103 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1101 . Online learning interface(s) 36 can facilitate reinforcement learning with human feedback (RLHF). Online learning interface(s) 36 can facilitate federated learning of machine-learned model(s) 1101 .

Model host 31 can execute machine-learned model(s) 1101 to perform inference for various tasks using various types of data. For example, various different input(s) 1102 and output(s) 1103 can be used for various different tasks. In some implementations, input(s) 1102 can be or otherwise represent image data. Machine-learned model(s) 1 can process the image data to generate an output. As an example, machine-learned model(s) 1101 can process the image data to generate an image recognition output (e.g., a recognition of the image data, a latent embedding of the image data, an encoded representation of the image data, a hash of the image data, etc.). As another example, machine-learned model(s) 1101 can process the image data to generate an image segmentation output. As another example, machine-learned model(s) 1101 can process the image data to generate an image classification output. As another example, machine-learned model(s) 1101 can process the image data to generate an image data modification output (e.g., an alteration of the image data, etc.). As another example, machine-learned model(s) 1101 can process the image data to generate an encoded image data output (e.g., an encoded and/or compressed representation of the image data, etc.). As another example, machine-learned model(s) 1101 can process the image data to generate an upscaled image data output. As another example, machine-learned model(s) 1101 can process the image data to generate a prediction output.

In some implementations, the task is a computer vision task. In some cases, input(s) 1102 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 1102 can be or otherwise represent natural language data. Machine-learned model(s) 1 can process the natural language data to generate an output. As an example, machine-learned model(s) 1101 can process the natural language data to generate a language encoding output. As another example, machine-learned model(s) 1101 can process the natural language data to generate a latent text embedding output. As another example, machine-learned model(s) 1101 can process the natural language data to generate a translation output. As another example, machine-learned model(s) 1101 can process the natural language data to generate a classification output. As another example, machine-learned model(s) 1101 can process the natural language data to generate a textual segmentation output. As another example, machine-learned model(s) 1101 can process the natural language data to generate a semantic intent output. As another example, machine-learned model(s) 1101 can process the natural language data to generate an upscaled text or natural language output (e.g., text or natural language data that is higher quality than the input text or natural language, etc.). As another example, machine-learned model(s) 1101 can process the natural language data to generate a prediction output (e.g., one or more predicted next portions of natural language content).

In some implementations, input(s) 1102 can be or otherwise represent speech data (e.g., data describing spoken natural language, such as audio data, textual data, etc.). Machine-learned model(s) 1 can process the speech data to generate an output. As an example, machine-learned model(s) 1101 can process the speech data to generate a speech recognition output. As another example, machine-learned model(s) 1101 can process the speech data to generate a speech translation output. As another example, machine-learned model(s) 1101 can process the speech data to generate a latent embedding output. As another example, machine-learned model(s) 1101 can process the speech data to generate an encoded speech output (e.g., an encoded and/or compressed representation of the speech data, etc.). As another example, machine-learned model(s) 1101 can process the speech data to generate an upscaled speech output (e.g., speech data that is higher quality than the input speech data, etc.). As another example, machine-learned model(s) 1101 can process the speech data to generate a textual representation output (e.g., a textual representation of the input speech data, etc.). As another example, machine-learned model(s) can process the speech data to generate a prediction output.

In some implementations, input(s) 1102 can be or otherwise represent latent encoding data (e.g., a latent space representation of an input, etc.). Machine-learned model(s) 1 can process the latent encoding data to generate an output. As an example, machine-learned model(s) 1101 can process the latent encoding data to generate a recognition output. As another example, machine-learned model(s) 1101 can process the latent encoding data to generate a reconstruction output. As another example, machine-learned model(s) 1101 can process the latent encoding data to generate a search output. As another example, machine-learned model(s) 1101 can process the latent encoding data to generate a reclustering output. As another example, machine-learned model(s) 1101 can process the latent encoding data to generate a prediction output.

In some implementations, input(s) 1102 can be or otherwise represent statistical data. Statistical data can be, represent, or otherwise include data computed and/or calculated from some other data source. Machine-learned model(s) 1 can process the statistical data to generate an output. As an example, machine-learned model(s) 1101 can process the statistical data to generate a recognition output. As another example, machine-learned model(s) 1101 can process the statistical data to generate a prediction output. As another example, machine-learned model(s) 1101 can process the statistical data to generate a classification output. As another example, machine-learned model(s) 1101 can process the statistical data to generate a segmentation output. As another example, machine-learned model(s) 1101 can process the statistical data to generate a visualization output. As another example, machine-learned model(s) 1101 can process the statistical data to generate a diagnostic output.

In some implementations, input(s) 1102 can be or otherwise represent sensor data. Machine-learned model(s) 1 can process the sensor data to generate an output. As an example, machine-learned model(s) 1101 can process the sensor data to generate a recognition output. As another example, machine-learned model(s) 1101 can process the sensor data to generate a prediction output. As another example, machine-learned model(s) 1101 can process the sensor data to generate a classification output. As another example, machine-learned model(s) 1101 can process the sensor data to generate a segmentation output. As another example, machine-learned model(s) 1101 can process the sensor data to generate a visualization output. As another example, machine-learned model(s) 1101 can process the sensor data to generate a diagnostic output. As another example, machine-learned model(s) 1101 can process the sensor data to generate a detection output.

In some implementations, machine-learned model(s) 1101 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g., one or more images or videos), the output comprises compressed visual data, and the task is a visual data compression task. In another example, the task may comprise generating an embedding for input data (e.g., input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1101 can be configured to output content generated in view of input(s) 1102. For instance, input(s) 1102 can be or otherwise represent data of one or more modalities that encodes context for generating additional content.

In some implementations, the task can be a text completion task. Machine-learned model(s) 1 can be configured to process input(s) 1102 that represent textual data and to generate output(s) 1103 that represent additional textual data that completes a textual sequence that includes input(s) 1102. For instance, machine-learned model(s) 1101 can be configured to generate output(s) 1103 to complete a sentence, paragraph, or portion of text that follows from a portion of text represented by input(s) 1102.

In some implementations, the task can be an instruction following the task. Machine-learned model(s) 1 can be configured to process input(s) 1102 that represent instructions to perform a function and to generate output(s) 1103 that advance a goal of satisfying the instruction function (e.g., at least a step of a multi-step procedure to perform the function). Output(s) 3 can represent data of the same or of a different modality as input(s) 1102. For instance, input(s) 1102 can represent textual data (e.g., natural language instructions for a task to be performed) and machine-learned model(s) 1101 can process input(s) 1102 to generate output(s) 1103 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1101 can process input(s) 1102 to generate output(s) 1103 that represent textual data responsive to the instructions (e.g., natural language responses, programming language responses, machine language responses, etc.). One or more output(s) 1103 can be iteratively or recursively generated to sequentially process and accomplish steps toward accomplishing the requested functionality. For instance, an initial output can be executed by an external system or be processed by machine-learned model(s) 1101 to complete an initial step of performing a function. Multiple steps can be performed, with a final output being obtained that is responsive to the initial instructions.

In some implementations, the task can be a question answering task. Machine-learned model(s) 1 can be configured to process input(s) 1102 that represent a question to answer and to generate output(s) 1103 that advance a goal of returning an answer to the question (e.g., at least a step of a multi-step procedure to perform the function). Output(s) 3 can represent data of the same or of a different modality as input(s) 1102. For instance, input(s) 1102 can represent textual data (e.g., natural language instructions for a task to be performed) and machine-learned model(s) 1101 can process input(s) 1102 to generate output(s) 1103 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1101 can process input(s) 1102 to generate output(s) 1103 that represent textual data responsive to the question (e.g., natural language responses, programming language responses, machine language responses, etc.). One or more output(s) 1103 can be iteratively or recursively generated to sequentially process and accomplish steps toward answering the question. For instance, an initial output can be executed by an external system or be processed by machine-learned model(s) 1101 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 1102 that represent context regarding a desired portion of image content. The context can include text data, image data, audio data, etc. Machine-learned model(s) 1 can be configured to generate output(s) 1103 that represent image data that depicts imagery related to the context. For instance, machine-learned model(s) 1101 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 1102 that represent context regarding a desired portion of audio content. The context can include text data, image data, audio data, etc. Machine-learned model(s) 1 can be configured to generate output(s) 1103 that represent audio data related to the context. For instance, machine-learned model(s) 1101 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 1102 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 1103 that represent data that aligns with the desired data. For instance, machine-learned model(s) 1101 can be configured to generate data values for populating a dataset. Values for the data object(s) can be selected based on the context (e.g., based on a probability determined based on the context).

Figure 13 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the present disclosure (e.g., engaging third-party tools, accessing third-party databases or other resources, etc.).

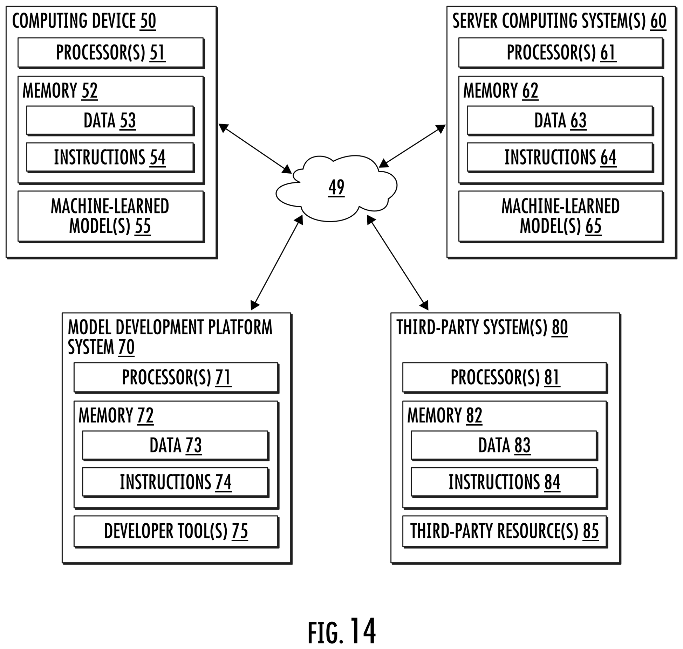

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 14 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1101 , such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1101 , such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or intraoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1101 , 4, 16, 20, 55, 65, etc. (e.g., third-party resource(s) 85).

Figure 14 illustrates one example arrangement of computing systems that can be used to implement the present disclosure. Other computing system configurations can be used as well. For example, in some implementations, one or both of computing device 50 or server computing system(s) 60 can implement all or a portion of the operations of model development platform system 70. For example, computing device 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing device 50 or server computing system(s) 60 can develop, update/train, or refine machine-learned models based on local datasets (e.g., for model personalization/customization, as permitted by user data preference selections).

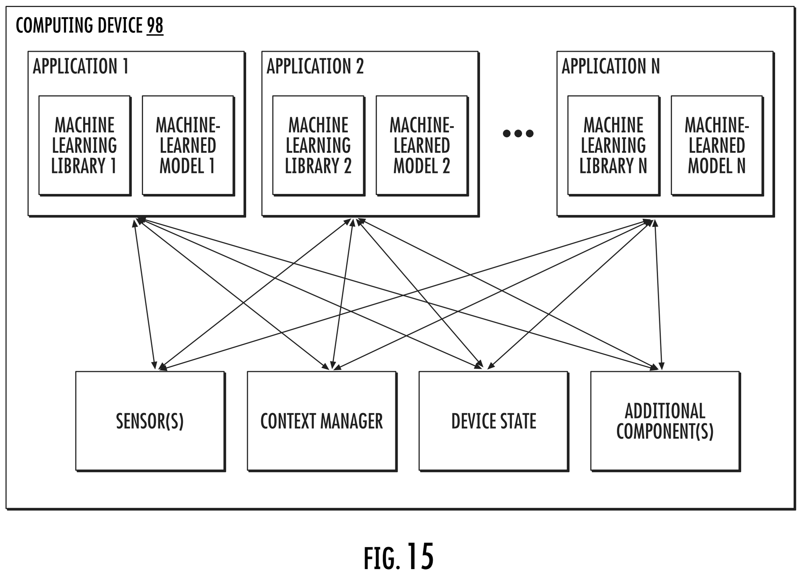

Figure 15 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 25, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

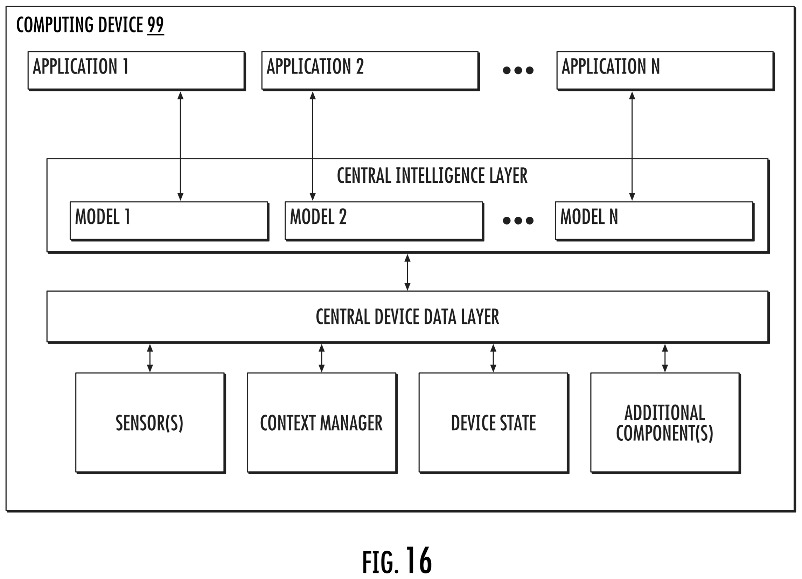

Figure 16 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 16, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 16, the central device data layer can communicate with a number of other components of the computing device, such as, for example, one or more sensors, a context manager, a device state component, or additional components. In some implementations, the central device data layer can communicate with each device component using an API (e.g., a private API).

The technology discussed herein makes reference to servers, databases, software applications, and other computer-based systems, as well as actions taken, and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure covers such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computing system for generating images of an object in a lifestyle context, comprising:
one or more processors; and
one or more non-transitory computer-readable media that collectively store:
a machine-learned model, wherein the machine-learned model is a zero-shot model and is configured to receive one or more input images that depict an object as input and output one or more images of the object in a different context; and
instructions that, when executed by the one or more processors, cause the computing system to perform operations, the operations comprising:
receiving, from a client device, an input query comprising one or more images of the object with a specific set of attributes in a first context;
generating an input prompt based on the one or more images;
generating one or more output images that depict the object with the specific set of attributes in a second context different from the first context based on the input prompt; and
causing display of the one or more output images.

2. The computing system of claim 1, wherein an original prompt is received with the one or more images and generating the input prompt further comprises:
rewriting the original prompt to create a plurality of rewritten prompts, wherein each rewritten prompt includes a distinct set of instructions for the machine-learned model.

3. The computing system of claim 2, wherein rewriting the original prompt to create a plurality of rewritten prompts further comprising:
rewriting the original prompt such that the plurality of rewritten prompts have an instruction-style format, wherein the machine-learned model was optionally trained to respond to prompts written with the instruction-style format.

4. The computing system of claim 2, wherein generating the one or more output images further comprises:
generating one or more output images for each rewritten prompt in the plurality of rewritten prompts.

5. The computing system of any preceding claim, the operations further comprising:
for a respective output image in the one or more output images:
evaluating the respective output image to determine whether the respective output image satisfies a fidelity metric; and
in response to determining that the respective output image does not satisfy the fidelity metric, removing the respective output image from the one or more output images, wherein evaluating the respective output image to determine whether the respective output image satisfies the fidelity metric optionally comprises:
determining whether the respective output image depicts the object.

6. The computing system of any preceding claim, wherein determining whether the respective output image depicts the object comprises:
determining one or more characteristics of the object; and
determining whether the respective output image includes the one or more characteristics of the object.

7. The computing system of any preceding claim, the operations further comprising:
generating, for one or more output images in the one or more output images, a quality score; and
ranking the one or more output images based on the quality score, the operations optionally further comprising:
selecting a predetermined number of output images based on the ranking of the one or more output images; and
providing the predetermined number of output images for display.

8. The computing system of any preceding claim, wherein the machine-learned model is trained using a large corpus of images and metadata about images in the large corpus of images.

9. The computing system of claim 8, wherein training the machine-learned model further comprising:
filtering the large corpus of images to identify a plurality of object image groups; and removing any images in the large corpus of images that are not included in at least one object image group

10. The computing system of claim 9, wherein identifying the plurality of object image groups further comprise:
identifying one or more neutral images that depict a first object with a neutral background;
identifying at least one lifestyle image that depicts a target lifestyle background; and
grouping the one or more neutral images and the at least one lifestyle image into an object image group associated with the first object, wherein the one or more neutral images optionally include at least two images that depict the first object from two different perspectives.

11. The computing system of claim 8, wherein identifying one or more neutral images that depict a first object with a neutral background further comprises:
identifying a target image that depict the first object with a non-neutral background; and
altering the target image to replace the non-neutral background with a neutral background.

12. The computing system of claim 10, wherein training the machine-learned model further comprising:
generating a target prompt based on the at least one lifestyle image;
providing the target prompt and one or more neutral images for a particular object image group to the machine-learned model as model input;
receiving model output from the machine-learned model based on the model input;
comparing the model output to the at least one lifestyle image; and
updating one or more parameters of the machine-learned model based on the comparison between the model output and the at least one lifestyle image.

13. The computing system of claim 8, wherein the large corpus of images includes a plurality of distinct subsets of images and training the machine-learned model further comprising:
training at least two preliminary zero-shot machine-learned models, wherein each preliminary zero-shot machine-learned model is trained based on a different distinct subset of images within the large corpus of images and has a plurality of parameter values based on the training;
generating average parameter values based on the plurality of parameter values for each of the at least two preliminary zero-shot machine-learned models; and
generating a deployment zero-shot machine-learned model using the average parameter values.

14. A method for generating images of an object in a different context, the method comprising:
receiving, by a computing system comprising one or more processors, from a client device, one or more images of the object in a first context;
generating, by the computing system, an input prompt based on the one or more images;
generating, by the computing system, one or more output images that depict the object in a second context different from the first context based on the input prompt, wherein generating the one or more output images is performed using a machine-learned model, wherein the machine-learned model is a zero-shot model; and
causing display, by the computing system, of the one or more output images.

15. One or more non-transitory computer-readable media that store instructions that, when executed by one or more processors, cause the one or more processors to perform operations, the operations comprising:
receiving from a client device, one or more images of an object in a first context;
generating an input prompt based on the one or more images;
generating one or more output images that depict the object in a second context different from the first context based on the input prompt, wherein generating the one or more output images is performed using a machine-learned model, wherein the machine-learned model is a zero-shot model; and
causing display of the one or more output images.
